# EUROPÄISCHE PATENTSCHRIFT

(11) **EP 3 889 448 B1**
(45) Veröffentlichungstag und Bekanntmachung des Hinweises auf die Patenterteilung: **03.08.2022**
(21) Anmeldenummer: 21160157.0
(22) Anmeldetag: 02.03.2021
(51) Int. Cl.: F16B 5/02, B60Q 1/26

(54) **BEFESTIGUNGSELEMENT**
FASTENING ELEMENT
ÉLÉMENT DE FIXATION

(30) Priorität: 31.03.2020 DE 102020204180
(43) Veröffentlichungstag der Anmeldung: 06.10.2021
(73) Patentinhaber: Witte Automotive GmbH, 42551 Velbert (DE)
(72) Erfinder: Purwin, Harry, 40882 Ratingen (DE); Cöpür, Aykut, 42329 Wuppertal (DE)
(74) Vertreter: Liedtke & Partner Patentanwälte

(56) Entgegenhaltungen:
- EP-A1- 2 933 144
- WO-A1-2013/064164
- WO-A1-2019/121023
- DE-A1-102019 212 136
- DE-U1-202009 007 421
- GB-A- 2 412 704

## Beschreibung

### Beschreibung

Die Erfindung betrifft ein Befestigungselement für ein Bauteil, insbesondere zur Befestigung an einem Karosseriebauteil eines Fahrzeugs.

Die EP 2 933 144 A1 offenbart eine Vorrichtung zur wenigstens teilweisen Befestigung einer Kraftfahrzeugleuchte in einer Einbauöffnung einer Karosserie eines Kraftfahrzeugs, eine hiermit ausgestattete Kraftfahrzeugleuchte und ein Verfahren zur Anordnung und Einstellung einer solchen Vorrichtung an einer Kraftfahrzeugleuchte. Die Vorrichtung umfasst eine Hohlschraube mit einem Außengewinde und einer sich koaxial zur Längsachse der Hohlschraube erstreckenden zentralen Öffnung, einen an der Kraftfahrzeugleuchte festlegbaren Gewindebolzen mit einer ersten, durch die zentrale Öffnung hindurchreichenden Gewindepartie, sowie ein in der zentralen Öffnung auf der ersten Gewindepartie koaxial zwischen Hohlschraube und dem Gewindebolzen angeordnetes hülsenförmiges Klemmteil. Die Hohlschraube weist einen einseitig des Außengewindes angeordneten, radial abstehenden Bund auf, welcher in montiertem Zustand der Vorrichtung der Kraftfahrzeugleuchte zugewandt ist. Das Klemmteil ist in der zentralen Öffnung drehbar angeordnet. Das Klemmteil ist in Axialrichtung parallel zur Längsachse formschlüssig angeordnet. Das Klemmteil weist eine koaxial zur Längsachse verlaufende, durchgehende Axialöffnung auf, deren Innendurchmesser kleiner ist, als der Außendurchmesser der ersten Gewindepartie. Das Klemmteil umfasst einen Ansatz, der eine in Eingriff mit einem Werkzeug bringbare Formgebung aufweist, um das Klemmteil zu drehen. Im Bund der Hohlschraube ist mindestens eine Anschlagnut angeordnet. Außerdem ist ein an der Kraftfahrzeugleuchte festgelegter Anschlag vorgesehen, der in montiertem Zustand der Vorrichtung in mindestens eine Anschlagnut eingreift. Das Verfahren sieht vor, zunächst den Gewindebolzen an der Kraftfahrzeugleuchte festzulegen, anschließend die Hohlschraube mit dem in deren zentraler Öffnung angeordneten Klemmteil mit dem Bund voraus auf die erste Gewindepartie aufzuschrauben, bis der an der Kraftfahrzeugleuchte festgelegte Anschlag in eine Anschlagnut eingreift, und dann durch Drehung des Klemmteils gegenüber der ersten Gewindepartie eine Einstellung der Position der Hohlschraube entlang des Gewindebolzens vorzunehmen.

Aufgabe der vorliegenden Erfindung ist es, ein verbessertes Befestigungselement anzugeben.

Die Aufgabe wird erfindungsgemäß mit einem Befestigungselement mit den Merkmalen des Patentanspruchs 1 gelöst.

Vorteilhafte Weiterbildungen der Erfindung sind Gegenstand der abhängigen Patentansprüche.

Ein erfindungsgemäßes Befestigungselement zum Verbinden eines ersten Bauteils mit einem zweiten Bauteil weist auf:
- ein stiftartiges Verbindungselement mit einem ersten Befestigungsbereich und einem zweiten Befestigungsbereich,
- eine Hülse, die zum Einsetzen in eine Aufnahmeöffnung des ersten Bauteils konfiguriert ist,
- ein Ausgleichselement, das mit einer Aufnahme zum Aufnehmen des ersten Befestigungsbereichs versehen ist und das zum Einsetzen und Verstellen in einer Längsrichtung in der Hülse konfiguriert ist,
wobei am Ausgleichselement mindesten eine Antriebsschnittstelle vorgesehen ist, mittels derer das Ausgleichselement in der Hülse in Längsrichtung verstellbar ist.

Das erfindungsgemäße Befestigungselement stellt ein lösbares Toleranzausgleichelement mit nachträglich axialer Verstellmöglichkeit und radialem Toleranzausgleich dar.

Das Befestigungselement ermöglicht, durch einfaches Einsetzen und Befestigen der Hülse im ersten Bauteil und Einschrauben des Verbindungselements im zweiten Bauteil eine (kraftschlüssige und/oder formschlüssige) Verbindung zwischen zwei Bauteilen, beispielsweise einer Karosserie und einem Anbauteil herzustellen. Das Befestigungselement lässt sich nach der erfolgten Montage durch Verdrehen des Verbindungselements in axialer Richtung einstellen und durch späteres Herausziehen des Verbindungselements aus dem Clip wieder trennen. Dabei bleibt die eingestellte Position für ein erneutes Befestigen bestehen.

Das erste Bauteil kann beispielsweise ein Trägerbauteil sein, insbesondere ein Karosserieblech eines Fahrzeugs.

Das zweite Bauteil kann zum Beispiel ein Anbauteil, wie eine Heckleuchte oder eine Seitenleuchte, sein.

In einer Ausführungsform weist der zweite Befestigungsbereich einen Gewindeabschnitt zum Eingreifen in einer Aufnahme des zweiten Bauteils auf. Der Gewindeabschnitt kann als ein selbstfurchendes oder metrisches Gewinde, insbesondere selbsthemmend, ausgebildet sein, welches in einer Aufnahme des zweiten Bauteils form- und/oder kraftschlüssig eingreift, welches sich insbesondere in die Aufnahme einschraubt. In einer weiteren Ausführungsform kann der zweite Befestigungsbereich in dem zweiten Bauteil festgelegt, insbesondere eingepresst, eingeklebt, eingespritzt oder eingeclipst oder einstückig mit dem zweiten Bauteil ausgebildet sein.

In einer Ausführungsform ist die Antriebsschnittstelle als eine untere Antriebsschnittstelle ausgebildet, die vom in das Ausgleichselement eingesetzten Verbindungselement weg weist und/oder die Antriebsschnittstelle ist als eine obere Antriebsschnittstelle ausgebildet, die zu dem in das Ausgleichselement eingesetzten Verbindungselement hin weist. Auf diese Weise kann das Ausgleichselement verstellt werden, wenn die Hülse im ersten Bauteil befestigt ist und das Verbindungselement im zweiten Bauteil verschraubt ist.

In einer Ausführungsform umfasst die Antriebsschnittstelle einen Außen- oder Innensechskant oder -vierkant, einen Außen- oder Innensechsrund, einen Schlitz oder einen Kreuzschlitz. Andere Formen der Antriebsschnittstelle sind ebenfalls möglich.

In einer Ausführungsform weisen das Ausgleichselement und die Hülse zueinander komplementäre Gewinde auf. Auf diese Weise kann die Verstellung in Längsrichtung durch Verdrehen erfolgen.

In einer Ausführungsform ist das Verbindungselement in der Aufnahme lösbar, aber gegen Herausziehen gehemmt gehalten. Auf diese Weise kann das zweite Bauteil vom ersten Bauteil abgezogen und wieder aufgesteckt werden. Der zuvor durch Verdrehen des Verbindungselements im zweiten Bauteil eingestellte axiale Abstand bleibt dabei erhalten.

In einer Ausführungsform ist das Ausgleichselement im Bereich der Aufnahme elastisch ausgebildet.

In einer Ausführungsform ist zur Abtrennung des ersten Befestigungsbereiches vom zweiten Befestigungsbereich ein Trennflansch am Verbindungselement vorgesehen.

In einer Ausführungsform ist eine Mutter zum Aufschrauben auf die Hülse vorgesehen, um das Befestigungselement am ersten Bauteil mittels einer Schraubverbindung zu halten. Alternativ sind auch Clipverbindungen möglich.

In einer Ausführungsform weisen die Mutter und die Hülse eine zueinander komplementäre Verzahnung auf, die konfiguriert ist, das Lösen oder Verlieren der Mutter zu erschweren.

In einer Ausführungsform ist in der Aufnahme ein Federelement zur formschlüssigen und/oder reibschlüssigen Verbindung des Ausgleichselements am Verbindungselement angeordnet. Ein solches, axial in beide Richtungen innerhalb der Aufnahme fixiertes Federelement kann Kräfte, wie eine Einführkraft und eine Ausziehkraft, insbesondere Druck- bzw. Zugkräfte, axial in beide Richtungen übertragen und in Richtung der Aufnahme ableiten, so dass das Befestigungselement mehrmals genutzt werden kann.

In einer Ausführungsform weist die Hülse eine Schnittstelle zur Aufnahme in der Aufnahmeöffnung des ersten Bauteils auf, wobei die Schnittstelle einen von der Kreisform abweichenden Querschnitt aufweist und/oder wobei die Schnittstelle einen kleineren Querschnitt als die Aufnahmeöffnung aufweist. Somit wird ein Verdrehen der Hülse in der Aufnahmeöffnung erschwert und/oder eine Positionseinstellung quer zur Längsrichtung ermöglicht.

Ausführungsbeispiele der Erfindung werden anhand von Zeichnungen näher erläutert. Dabei zeigen:
- Figur 1: eine schematische Ansicht eines Befestigungselements zum Verbinden eines ersten Bauteils mit einem zweiten Bauteil,
- Figur 2: eine schematische Ansicht des Befestigungselements von schräg unten mit Blick auf eine untere Antriebsschnittstelle,
- Figur 3: eine schematische Schnittansicht des Befestigungselements,
- Figur 4: eine schematische Ansicht eines Abschnitts des ersten Bauteils mit einer Aufnahmeöffnung,
- Figur 5: eine schematische Ansicht des Befestigungselements von unten,
- Figur 6: eine schematische Ansicht eines in der Aufnahme des zweiten Bauteils befestigten Verbindungselements,
- Figur 7: eine schematische Ansicht einer Hülse mit einem darin eingesetzten Ausgleichselement, das am Verbindungselement befestigt ist,
- Figur 8: eine schematische Ansicht des in das erste Bauteil eingesetzten Befestigungselements und des damit verbundenen zweiten Bauteils,
- Figur 9: eine schematische Ansicht des in das erste Bauteil eingesetzten und mit einer Mutter befestigten Befestigungselements und des damit verbundenen zweiten Bauteils, und
- Figur 10: eine schematische Ansicht des Befestigungselements nach dem Abziehen des zweiten Bauteils vom ersten Bauteil.

Einander entsprechende Teile sind in allen Figuren mit den gleichen Bezugszeichen versehen.

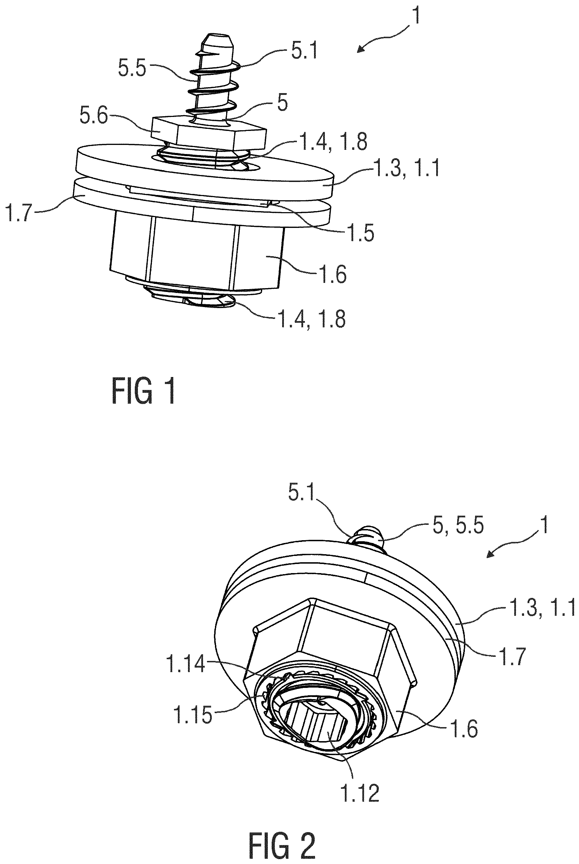

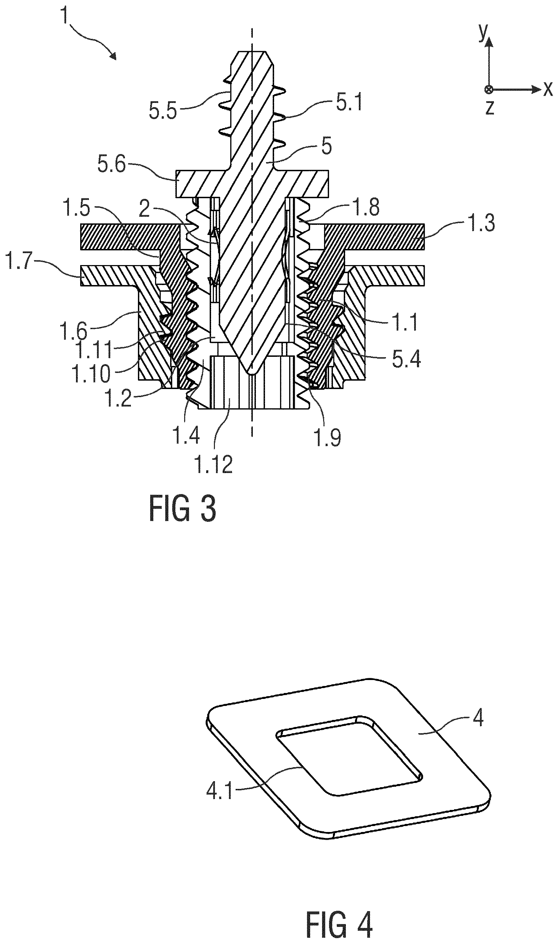

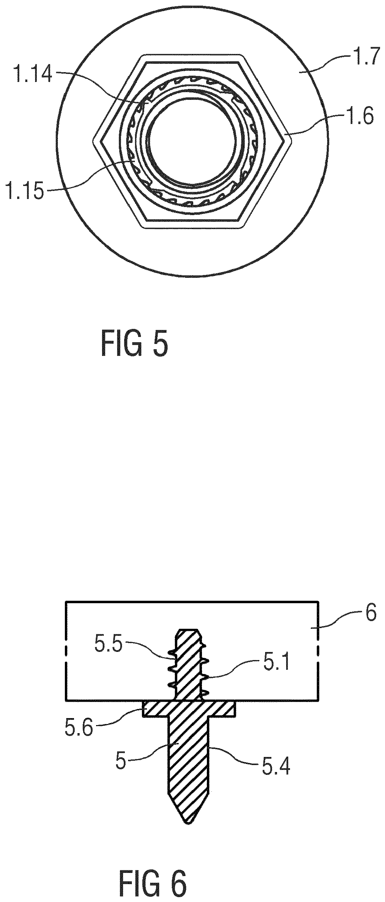

**Figur 1** ist eine schematische Ansicht eines Befestigungselements 1 zum Verbinden eines ersten Bauteils 4 mit einem zweiten Bauteil 6 und zum Ausgleichen von Toleranzen zwischen dem ersten Bauteil 4 und dem zweiten Bauteil 6. **Figur 2** zeigt eine schematische Ansicht des Befestigungselements 1 von schräg unten mit Blick auf eine untere Antriebsschnittstelle 1.12. **Figur 3** zeigt eine schematische Schnittansicht des Befestigungselements 1. **Figur 4** ist eine schematische Ansicht eines Abschnitts des ersten Bauteils 4 mit einer Aufnahmeöffnung 4.1. **Figur 5** ist eine schematische Ansicht des Befestigungselements 1 von unten.

Das Befestigungselement 1 kann im Wesentlichen zylindrisch ausgebildet sein und weist eine Hülse 1.1 auf.

Das Befestigungselement 1 kann ein- oder mehrteilig ausgebildet sein und beispielsweise aus einem Metall- oder Kunststoffmaterial oder aus einer Kombination aus Metallteilen und Kunststoffteilen gebildet sein.

Ein weiterer Aspekt sieht vor, dass die Hülse 1.1 einen Kopfabschnitt 1.3 aufweist, der als ein Dichtungselement ausgebildet sein kann, beispielsweise in Form einer Scheibe oder eines Pilzkopfes, und einen größeren Durchmesser als die Hülse 1.1 aufweist. Alternativ kann der Kopfabschnitt 1.3 auch lediglich mindestens zwei Sektoren, beispielsweise drei Sektoren, eines Pilzkopfes umfassen. Die Hülse 1.1 bildet eine Buchse des Befestigungselements 1. Die Hülse 1.1 und der Kopfabschnitt 1.3 können als ein Bauteil, insbesondere aus Kunststoff, gebildet sein. Beispielsweise sind die Hülse 1.1 und der Kopfabschnitt 1.3 als ein 2-Komponenten-Kunststoffspritzgussteil ausgebildet. Dabei kann die Hülse 1.1 aus einem härteren Kunststoffmaterial und der Kopfabschnitt 1.3 aus einem weicheren Kunststoffmaterial gebildet.

In der Hülse 1.1 kann ein Ausgleichselement 1.4 verstellbar, insbesondere verstellbar in einer axialen Richtung y der Hülse 1.1, angeordnet sein. Die Hülse 1.1 und das Ausgleichselement 1.4 können hierfür mit zueinander komplementären Gewinden 1.8, 1.9 versehen sein.

Das Ausgleichselement 1.4 ist mit einer Aufnahme 1.2 versehen, insbesondere einer Hohlzylinderform.

In der Aufnahme 1.2 kann ein Federelement 2 angeordnet sein, beispielsweise aus Metall, insbesondere aus einem Stahlmaterial, vorzugsweise Federstahl.

Ferner weist das Befestigungselement 1 ein stiftartiges Verbindungselement 5 auf.

Das erste Bauteil 4 ist beispielsweise ein Trägerbauteil, insbesondere ein Karosserieblech eines Fahrzeugs. Die Aufnahmeöffnung 4.1 kann einen von der Kreisform abweichenden Querschnitt aufweisen. Die Hülse 1.1 kann eine zur Aufnahmeöffnung 4.1 komplementäre Schnittstelle 1.5 aufweisen. Ebenso kann die Aufnahmeöffnung 4.1 größer gestaltet sein als die Schnittstelle 1.5, um einen Positionsausgleich in Querrichtungen x und z quer zur axialen Richtung y der Hülse 1.1 zu ermöglichen.

Insbesondere können die Aufnahmeöffnung 4.1 und die Schnittstelle 1.5 jeweils einen annähernd quadratischen Querschnitt, vorzugsweise mit abgerundeten Ecken, aufweisen.

Die Aufnahme 1.2 im Ausgleichselement 1.4 ist zumindest einseitig, insbesondere kopfseitig, offen zur Aufnahme eines Verbindungselements 5 ausgebildet. Insbesondere kann die Aufnahme 1.2 als eine Durchgangsöffnung auch am bodenseitigen Ende und somit beidseitig offen ausgebildet sein.

Ein zweites Bauteil 6, zum Beispiel ein Anbauteil, wie eine Heckleuchte oder eine Seitenleuchte, kann axial einstellbar an dem ersten Bauteil 4, zum Beispiel einem Trägerbauteil, wie einem Karosserieblech, befestigt oder befestigbar sein.

Das Befestigungselement 1 kann an dem ersten Bauteil 4, beispielsweise fahrzeugseitig, vormontiert werden. Beispielsweise kann das Befestigungselement 1 mittels einer Rast- oder Klemmverbindung in einer Aufnahmeöffnung 4.1 des ersten Bauteils 4 angeordnet und dort form- und/oder kraftschlüssig gehalten werden. In der gezeigten Ausführungsform ist eine

Mutter 1.6 vorgesehen, die auf die Hülse 1.1 aufgeschraubt werden kann, um das Befestigungselement 1 am ersten Bauteil 4 mittels einer Schraubverbindung zu halten. Hierzu können in der Mutter 1.6 und auf der Hülse 1.1 weitere komplementäre Gewinde 1.10, 1.11 vorgesehen sein. Weiter kann die Mutter 1.6 einen Bund 1.7 zur Anlage am ersten Bauteil 4 aufweisen.

Ebenso kann das Verbindungselement 5 an dem zweiten Bauteil 6, beispielsweise anbauseitig an der Heckleuchte oder Seitenleuchte, vormontiert werden. Beispielsweise weist das Verbindungselement 5 einen Gewindeabschnitt 5.1 auf. Der Gewindeabschnitt 5.1 kann als ein selbstfurchendes oder metrisches Gewinde, insbesondere selbsthemmend, ausgebildet sein, welches in einer Aufnahme des zweiten Bauteils 6 form- und/oder kraftschlüssig eingreift, insbesondere einschraubt. Alternativ kann das Verbindungselement 5 in dem zweiten Bauteil 6 festgelegt, beispielsweise eingepresst, eingeklebt, eingespritzt oder eingeclipst sein.

Anschließend wird das Verbindungselement 5 mit dem vormontierten zweiten Bauteil 6 an dem ersten Bauteil 4 befestigt, wobei die Verbindung beider Bauteile 4 und 6 axial einstellbar ist.

Das Verbindungselement 5 ist als ein Bolzen ausgeführt, der zur Abtrennung eines ersten Befestigungsbereiches 5.4 für die Aufnahme 1.2 im Ausgleichselement 1.4 von einem zweiten Befestigungsbereich 5.5 für das zweite Bauteil 6 einen Trennflansch 5.6 aufweist. Der Trennflansch 5.6 steht radial nach außen vor und ist scheibenförmig in Art eines Bolzenbundes ausgeführt und kann mit einem Sechskant oder Vierkant versehen sein.

In einer Ausführungsform ist am Ausgleichselement 1.4 eine untere Antriebsschnittstelle 1.12 vorgesehen, beispielsweise ein Außen- oder Innensechskant oder -vierkant, ein Außen- oder Innensechsrund, ein Schlitz oder ein Kreuzschlitz. Die untere Antriebsschnittstelle 1.12 weist insbesondere vom in das Ausgleichselement 1.4 eingesetzten Verbindungselement 5 weg und kann aus der Hülse 1.1 herausragen, wenn das Ausgleichselement 1.4 in der Hülse 1.1 angeordnet ist.

In einer Ausführungsform ist alternativ oder zusätzlich am Ausgleichselement 1.4 eine obere Antriebsschnittstelle 1.13 vorgesehen, beispielsweise ein Außen- oder Innensechskant oder -vierkant, ein Außen- oder Innensechsrund, ein Schlitz oder ein Kreuzschlitz. Die obere Antriebsschnittstelle 1.13 weist insbesondere zu dem in das Ausgleichselement 1.4 eingesetzten Verbindungselement 5 hin und ist insbesondere dann zugänglich, wenn das Verbindungselement 5 nicht in das Ausgleichselement 1.4 eingesetzt ist.

Die Mutter 1.6 und das Ausgleichselement 1.4 können eine zueinander komplementäre Verzahnung 1.14, 1.15 aufweisen, die das Lösen oder Verlieren der Mutter 1.6 erschwert oder verhindert.

Durch Befestigen des Gewindeabschnitts 5.1 in der Aufnahme des zweiten Bauteils 6, beispielsweise durch Einschrauben, kann eine Baugruppe gebildet werden, wie in **Figur** 6 gezeigt. Der Gewindeabschnitt 5.1 kann beispielsweise bis zum Anschlagen des Trennflansches 5.6 am zweiten Bauteil 6 eingeschraubt werden.

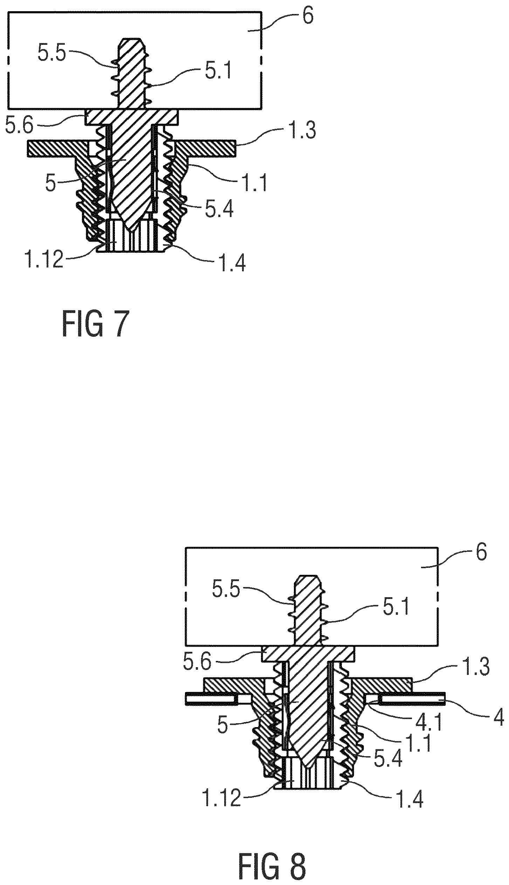

In einer Ausführungsform wird die Hülse 1.1 mit dem darin eingesetzten Ausgleichselement 1.4, wie in **Figur** 7 gezeigt, am Verbindungselement 5 befestigt, beispielsweise formschlüssig und/oder reibschlüssig. Diese Verbindung, beispielsweise über das Federelement 2, ist durch Herausziehen des Verbindungselements 5 aus der Aufnahme 1.2 wieder lösbar. Hierzu kann das Ausgleichselement 1.4 entsprechend elastisch ausgebildet sein.

Alternativ ist die Hülse 1.1 mit dem darin eingesetzten Ausgleichselement 1.4 vor der Montage der Komponenten 4, 6 bereits am Verbindungselement 5 befestigt, beispielsweise formschlüssig und/oder reibschlüssig.

Die Baugruppe, umfassend das zweite Bauteil 6 und das in der Aufnahme befestigte Befestigungselement 1, kann dem ersten Bauteil 4, beispielsweise einem Karosserieblech eines Fahrzeugs, zugeführt werden, wobei die Hülse 1.1 in die Aufnahmeöffnung 4.1 des ersten Bauteils 4 eingeführt werden kann, wie in **Figur 8** gezeigt. **Figur** 8 ist eine schematische Ansicht des in das erste Bauteil 4 eingesetzten Befestigungselements 1 und des damit verbundenen zweiten Bauteils 6. In diesem Zustand kann ein Positionsausgleich in den Querrichtungen x und z quer zur axialen Richtung y der Hülse 1.1 erfolgen. Der Ausschnitt 4.1 kann ferner einen kleineren Durchmesser als der Kopfabschnitt 1.3 aufweisen.

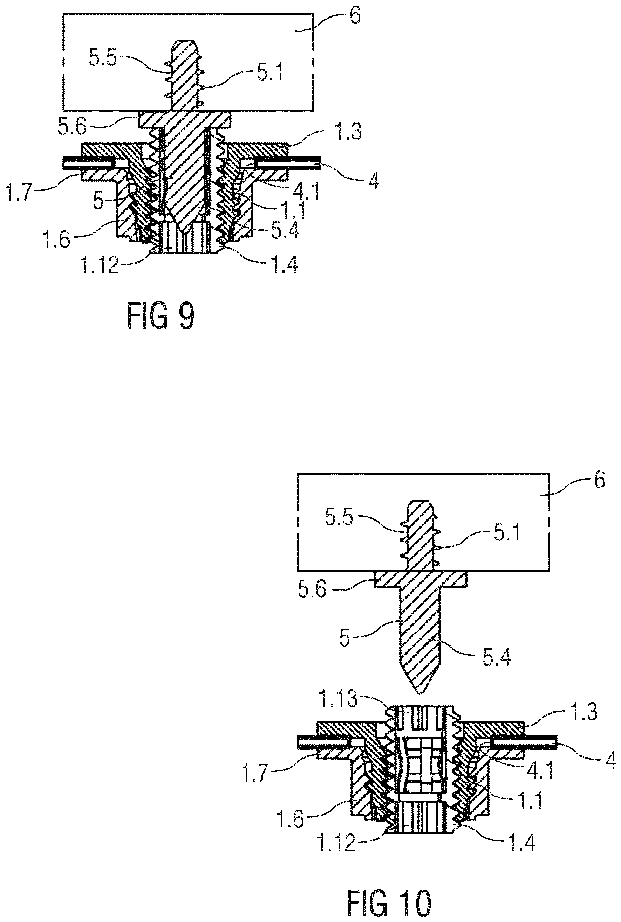

**Figur** 9 ist eine schematische Ansicht des in das erste Bauteil 4 eingesetzten Befestigungselements 1 und des damit verbundenen zweiten Bauteils 6, wobei die Mutter 1.6 auf die Hülse 1.1 aufgeschraubt ist. Somit ist das Befestigungselement 1 am ersten Bauteil 4 befestigt und bezüglich der Querrichtungen x und z fixiert.

Nach der so erfolgten Montage des zweiten Bauteils 6 am ersten Bauteil 4 mittels des Befestigungselements 1 kann durch Verdrehen des Ausgleichselements 1.4 mittels der unteren Antriebsschnittstelle 1.12 eine axiale Position des zweiten Bauteils 6 relativ zum ersten Bauteil 4 eingestellt werden. Wird das zweite Bauteil 6 nun in axialer Richtung y abgezogen wie in **Figur 10** gezeigt, dann verbleibt das bolzenförmige Verbindungselement 5 in der Aufnahme 6.1 des zweiten Bauteils 6 und die Hülse 1.1, das Ausgleichselement 1.4 und die Mutter 1.6 verbleiben in der Aufnahmeöffnung 4.1 des ersten Bauteils 4, beispielsweise einem Trägerbauteil, wie einem Karosserieblech. **Figur 10** ist eine schematische Ansicht des Befestigungselements 1 nach dem Abziehen des zweiten Bauteils 6 vom ersten Bauteil 4.

In diesem Zustand ist auch die obere Antriebsschnittstelle 1.13 zugänglich, so dass das Ausgleichselement 1.4 auch auf diese Weise in axialer Richtung y verstellt werden kann.

In einer alternativen Ausführungsform können die Aufnahme 1.2 und das Verbindungselement 5 im ersten Befestigungsbereich 5.4 eine umlaufende Hohlkehle des Verbindungselements 5 und eine dazu komplementäre Ausbauchung der Aufnahme 1.2 umfassen.

In einer alternativen Ausführungsform können die Aufnahme 1.2 und das Verbindungselement 5 im ersten Befestigungsbereich 5.4 eine radiale Ausbauchung des Verbindungselements 5 und eine dazu komplementäre umlaufende Hohlkehle in der Aufnahme 1.2 umfassen.

In einer alternativen Ausführungsform können die Aufnahme 1.2 und das Verbindungselements 5 im ersten Befestigungsbereich 5.4 eine radiale Ausbauchung des Verbindungselements 5 und eine dazu komplementäre umlaufende Hohlkehle in der Aufnahme 1.2 umfassen, wobei die Ausbauchung zum Verbindungselement 5 in Richtung vom zweiten Bauteil 6 in einem flacheren Winkel verlaufen kann als in entgegengesetzter Richtung, so dass das Verbindungselement 5 leichter in die Aufnahme 1.2 einführbar als daraus herausziehbar ist.

In einer alternativen Ausführungsform kann das Verbindungselement 5 im ersten Befestigungsbereich 5.4 eine umlaufende Hohlkehle aufweisen und die Aufnahme 1.2 auf ihrer Innenseite dazu komplementäre elastische Arme aufweisen, die in die Hohlkehle eingreifen. Die elastischen Arme können an ihrem dem Kopfabschnitt 1.3 zugewandten Ende an der Aufnahme1.2 befestigt sein und in die entgegengesetzte Richtung ragen. Die Hohlkehle im Verbindungselement 5 kann zum Verbindungselement 5 in Richtung vom zweiten Bauteil 6 weg in einem steileren Winkel verlaufen als in entgegengesetzter Richtung, so dass das Verbindungselement 5 leichter in die Aufnahme 1.2 einführbar als daraus herausziehbar ist.

In einer alternativen Ausführungsform kann das Verbindungselement 5 im ersten Befestigungsbereich 5.4 eine umlaufende Hohlkehle aufweisen und die Aufnahme 1.2 auf ihrer Innenseite dazu eine komplementäre Ausbauchung aufweisen, die in die Hohlkehle eingreift. Die Hohlkehle im Verbindungselement 5 kann zum Verbindungselement 5 in Richtung vom zweiten Bauteil 6 weg in einem steileren Winkel verlaufen als in entgegengesetzter Richtung, so dass das Verbindungselement 5 leichter in die Aufnahme 1.2 einführbar als daraus herausziehbar ist.

In einer alternativen Ausführungsform kann das Verbindungselement 5 im ersten Befestigungsbereich 5.4 zylindrisch gebildet sein und die Aufnahme 1.2 auf ihrer Innenseite dazu komplementär ebenfalls zylindrisch gebildet sein.

In einer alternativen Ausführungsform kann das Verbindungselement 5 im ersten Befestigungsbereich 5.4 im Wesentlichen zylindrisch gebildet und mit einer Riffelung versehen sein und die Aufnahme 1.2 auf ihrer Innenseite ebenfalls im Wesentlichen zylindrisch gebildet sein. In der Aufnahme 1.2 ist ein Federelement 2 angeordnet und axial in beide Richtungen fest mit einer Innenseite der Aufnahme 1.2 verbunden.

Ein solches, axial in beide Richtungen innerhalb der Aufnahme 1.2 fixiertes Federelement 2 kann Kräfte, wie eine Einführkraft und eine Ausziehkraft, insbesondere Druck- bzw. Zugkräfte, axial in beide Richtungen übertragen und in Richtung der Aufnahme 1.2 ableiten, so dass das Befestigungselement 1 mehrmals genutzt werden kann.

In einer möglichen Ausführungsform sind die Hülse 1.1 aus Kunststoff und das Federelement 2 aus Metall gebildet.

Das Federelement 2 umfasst beispielsweise einen Basiskörper, von welchem radial nach außen Federarme abstehen, die form- und/oder kraftschlüssig in die Innenseite der Aufnahme 1.2 eingreifen. Mittels der Federarme lassen sich gezielt axial wirkende Kräfte und deren Ableitung in beide Richtungen einstellen.

Der Basiskörper des Federelements 2 ist beispielsweise hülsenförmig ausgebildet. Die mehreren Federarme sind beispielsweise entlang einer Längsausdehnung des Basiskörpers übereinander in mehreren Reihen angeordnet oder ausgebildet. Dabei können die Federarme bezüglich des Basiskörpers einander diametral gegenüberliegend angeordnet oder ausgebildet sein. Eine solche, insbesondere zweiseitige oder zweireihige, Anordnung von Federarmen am Basiskörper ermöglicht eine symmetrische Kraftübertragung und -ableitung.

Alternativ kann eine einseitige oder einreihige Anordnung von Federarmen am Basiskörper ausgebildet sein, welche eine asymmetrische Kraftübertragung und -ableitung ermöglicht.

Zusätzlich kann der Basiskörper außerhalb der Reihen der Federarme bereichsweise einen wellenförmigen Abschnitt aufweisen. Dieser wellenförmige Abschnitt des Basiskörpers ermöglicht einen Reib- oder Klemmschluss mit der Innenseite der Aufnahme 1.2 außerhalb des Form- und/oder Kraftschlusses der Federarme mit der Innenseite.

Die Federarme können radial nach außen ab stehen und dringen dann im in der Aufnahme 1.2 eingesetzten Zustand in die Innenseite der Aufnahme 1.2 ein und bilden einen Form- und/oder Kraftschluss mit der Innenseite der Aufnahme 1.2.

Zusätzlich kann der Basiskörper Federarme aufweisen, die radial nach innen gerichtet sind und vom Basiskörper radial nach innen abstehen.

Beispielsweise weisen benachbarte Federarme und mindestens einer der Reihen abwechselnd radial nach außen und radial nach innen gerichtete Federenden auf. Darüber können die Federarme einer oder der jeweiligen Reihe in einem axialen Abstand zueinander angeordnet sein. Dies ermöglicht eine axiale Einstellbarkeit der Verbindung, beispielsweise mittels entsprechender Abstände in Verstellschritten. Hierdurch sind axiale Verstellschritte zum Ausgleich von Toleranzen, insbesondere von kleinen Bauteiltoleranzen, in kleinen Schritten von beispielsweise 0,2 cm bis 1 cm, insbesondere von 0,35 cm möglich.

Dabei können die Federarme als Rastarme, Ratschen oder Klemmarme oder in einer anderen geeigneten Form ausgebildet sein, welche ein Form- und/oder Kraftschluss mit einer angrenzenden Fläche, wie der Innenseite der Aufnahme 1.2 ermöglicht.

Die Aufnahme 1.2 kann in allen Ausführungsformen im Bereich des Kopfabschnitts 1.3 trichterartig gebildet sein, um das Einführen des Verbindungselements 5 zu erleichtern.

### BEZUGSZEICHENLISTE

- 1: Befestigungselement
- 1.1: Hülse
- 1.2: Aufnahme
- 1.3: Kopfabschnitt
- 1.4: Ausgleichselement
- 1.5: Schnittstelle
- 1.6: Mutter
- 1.7: Bund
- 1.8: Gewinde
- 1.9: Gewinde
- 1.10: Gewinde
- 1.11: Gewinde
- 1.12: untere Antriebsschnittstelle
- 1.13: obere Antriebsschnittstelle
- 1.14: Verzahnung
- 1.15: Verzahnung
- 2: Federelement
- 4: Erstes Bauteil
- 4.1: Aufnahmeöffnung
- 5: Verbindungselement
- 5.1: Gewindeabschnitt
- 5.4: erster Befestigungsbereich
- 5.5: zweiter Befestigungsbereich
- 5.6: Trennflansch
- 6: Zweites Bauteil
- x: Querrichtung
- y: axiale Richtung
- z: Querrichtung

## Patentansprüche

1. Befestigungselement (1) zum Verbinden eines ersten Bauteils (4) mit einem zweiten Bauteil (6), wobei das Befestigungselement (1) aufweist:
- ein stiftartiges Verbindungselement (5) mit einem ersten Befestigungsbereich (5.4) und einem zweiten Befestigungsbereich (5.5),
- eine Hülse (1.1), die zum Einsetzen in eine Aufnahmeöffnung (4.1) des ersten Bauteils (4) konfiguriert ist,
- ein Ausgleichselement (1.4), das mit einer Aufnahme (1.2) zum Aufnehmen des ersten Befestigungsbereichs (5.4) versehen ist und das zum Einsetzen und Verstellen in einer Längsrichtung (y) in der Hülse (1.1) konfiguriert ist,
wobei am Ausgleichselement (1.4) mindesten eine Antriebsschnittstelle (1.12, 1.13) vorgesehen ist, mittels derer das Ausgleichselement (1.4) in der Hülse (1.1) in Längsrichtung (y) verstellbar ist.

2. Befestigungselement (1) nach Anspruch 1, wobei der zweite Befestigungsbereich (5.5) einen Gewindeabschnitt (5.1) zum Eingreifen in einer Aufnahme des zweiten Bauteils (6) aufweist oder wobei der zweite Befestigungsbereich (5.5) in dem zweiten Bauteil (6) festgelegt, insbesondere eingepresst, eingeklebt, eingespritzt oder eingeclipst oder einstückig mit dem zweiten Bauteil (6) ausgebildet ist.

3. Befestigungselement (1) nach Anspruch 1 oder 2, wobei die Antriebsschnittstelle (1.12, 1.13) als eine untere Antriebsschnittstelle (1.12) ausgebildet ist, die vom in das Ausgleichselement (1.4) eingesetzten Verbindungselement (5) weg weist und/oder wobei die Antriebsschnittstelle (1.12, 1.13) als eine obere Antriebsschnittstelle (1.13) ausgebildet ist, die zu dem in das Ausgleichselement (1.4) eingesetzten Verbindungselement (5) hin weist.

4. Befestigungselement (1) nach einem der vorhergehenden Ansprüche, wobei die Antriebsschnittstelle (1.12, 1.13) einen Außen- oder Innensechskant oder - vierkant, einen Außen- oder Innensechsrund, einen Schlitz oder einen Kreuzschlitz umfasst.

5. Befestigungselement (1) nach einem der vorhergehenden Ansprüche, wobei das Ausgleichselement (1.4) und die Hülse (1.1) zueinander komplementäre Gewinde (1.8, 1.9) aufweisen.

6. Befestigungselement (1) nach einem der vorhergehenden Ansprüche, wobei zur Abtrennung des ersten Befestigungsbereiches (5.4) vom zweiten Befestigungsbereich (5.5) ein Trennflansch (5.6) am Verbindungselement (5) vorgesehen ist.

7. Befestigungselement (1) nach einem der vorhergehenden Ansprüche, wobei eine Mutter (1.6) zum Aufschrauben auf die Hülse (1.1) vorgesehen ist, um das Befestigungselement (1) am ersten Bauteil (4) mittels einer Schraubverbindung zu halten.

8. Befestigungselement (1) nach Anspruch 7, wobei die Mutter (1.6) und die Hülse (1.1) eine zueinander komplementäre Verzahnung (1.14, 1.15) aufweisen, die konfiguriert ist, das Lösen oder Verlieren der Mutter (1.6) zu erschweren.

9. Befestigungselement (1) nach einem der vorhergehenden Ansprüche, wobei in der Aufnahme (1.2) ein Federelement (2) zur formschlüssigen und/oder reibschlüssigen Verbindung des Ausgleichselements (1.4) am Verbindungselement (5) angeordnet ist.

10. Befestigungselement (1) nach einem der vorhergehenden Ansprüche, wobei die Hülse (1.1) eine Schnittstelle (1.5) zur Aufnahme in der Aufnahmeöffnung (4.1) des ersten Bauteils (4) aufweist, wobei die Schnittstelle (1.5) einen von der Kreisform abweichenden Querschnitt aufweist und/oder wobei die Schnittstelle (1.5) einen kleineren Querschnitt als die Aufnahmeöffnung (4.1) aufweist.

## Claims

1. A fastening element (1) for connecting a first component (4) to a second component (6), wherein the fastening element (1) has:
- a pin-like connecting element (5) with a first fastening region (5.4) and a second fastening region (5.5),
- a sleeve (1.1) which is configured for insertion into a receiving opening (4.1) of the first component (4),
- a compensation element (1.4) which is provided with a receptacle (1.2) for receiving the first fastening region (5.4) and which is configured for insertion and adjustment in a longitudinal direction (y) in the sleeve (1.1),
wherein at least one drive interface (1.12, 1.13) is provided on the compensating element (1.4), by means of which the compensating element (1.4) can be adjusted in the longitudinal direction (y) in the sleeve (1.1).

2. The fastening element (1) according to claim 1, wherein the second fastening region (5.5) has a threaded portion (5.1) for engaging in a receptacle of the second component (6) or wherein the second fastening region (5.5) is fixed, in particular, pressed, glued, injected, or clipped, in the second component (6), or is formed in one piece with the second component (6).

3. The fastening element (1) according to claim 1 or 2, wherein the drive interface (1.12, 1.13) is designed as a lower drive interface (1.12) which faces away from the connecting element (5) inserted into the compensating element (1.4) and/or wherein the drive interface (1.12, 1.13) is designed as an upper drive interface (1.13) which points towards the connecting element (5) inserted into the compensating element (1.4) .

4. The fastening element (1) according to any one of the preceding claims, wherein the drive interface (1.12, 1.13) comprises a hexagonal or square head or recess, a hexalobular external or internal driving feature, a slot or a cross slot.

5. The fastening element (1) according to any one of the preceding claims, wherein the compensating element (1.4) and the sleeve (1.1) have threads (1.8, 1.9) which are complementary to each other.

6. The fastening element (1) according to any one of the preceding claims, wherein a separating flange (5.6) is provided on the connecting element (5) to separate the first fastening region (5.4) from the second fastening region (5.5).

7. The fastening element (1) according to any one of the preceding claims, wherein a nut (1.6) is provided for screwing onto the sleeve (1.1) in order to hold the fastening element (1) on the first component (4) by means of a screw connection.

8. The fastening element (1) according to claim 7, wherein the nut (1.6) and the sleeve (1.1) have mutually complementary teeth (1.14, 1.15) which are configured to inhibit loosening of, or losing, the nut (1.6).

9. The fastening element (1) according to any one of the preceding claims, wherein a spring element (2) is arranged in the receptacle (1.2) for a positive and/or non-positive connection of the compensating element (1.4) on the connecting element (5).

10. The fastening element (1) according to any one of the preceding claims, wherein the sleeve (1.1) has an interface (1.5) to be accommodated in the receiving opening (4.1) of the first component (4), wherein the interface (1.5) has a cross-section deviating from the circular shape and/or wherein the interface (1.5) has a smaller cross-section than the receiving opening (4.1).

## Revendications

1. Élément de fixation (1) servant à connecter un premier composant (4) à un deuxième composant (6), l'élément de fixation (1) présentant :
- un élément de connexion (5) de type goupille doté d'une première région de fixation (5.4) et d'une deuxième région de fixation (5.5),
- une douille (1.1), qui est configurée pour l'insertion dans une ouverture de logement (4.1) du premier composant (4),
- un élément de compensation (1.4), qui est doté d'un logement (1.2) pour le logement de la première région de fixation (5.4) et qui est configuré pour l'insertion et le réglage dans une direction longitudinale (y) dans la douille (1.1),
au moins une interface d'entraînement (1.12, 1.13) étant prévue sur l'élément de compensation (1.4), interface au moyen de laquelle l'élément de compensation (1.4) est réglable dans la direction longitudinale (y) dans la douille (1.1).

2. Élément de fixation (1) selon la revendication 1, la deuxième région de fixation (5.5) présentant une partie filetée (5.1) pour l'entrée en prise dans un logement du deuxième composant (6) ou la deuxième région de fixation (5.5) étant fixée, en particulier enfoncée, collée, injectée ou enclipsée dans le deuxième composant (6) ou étant réalisée d'un seul tenant avec le deuxième composant (6).

3. Élément de fixation (1) selon la revendication 1 ou 2, l'interface d'entraînement (1.12, 1.13) étant réalisée sous la forme d'une interface d'entraînement inférieure (1.12), qui est détournée de l'élément de connexion (5) inséré dans l'élément de compensation (1.4) et/ou l'interface entraînement (1.12, 1.13) étant réalisée sous la forme d'une interface d'entraînement supérieure (1.13), qui est tournée vers l'élément de connexion (5) inséré dans l'élément de compensation (1.4).

4. Élément de fixation (1) selon l'une des revendications précédentes, l'interface d'entraînement (1.12, 1.13) comprenant une empreinte à six pans ou quatre pans extérieurs ou intérieurs, une empreinte à six lobes externes ou internes, une fente ou une fente cruciforme.

5. Élément de fixation (1) selon l'une des revendications précédentes, l'élément de compensation (1.4) et la douille (1.1) présentant des filetages (1.8, 1.9) complémentaires l'un à l'autre.

6. Élément de fixation (1) selon l'une des revendications précédentes, une collerette de séparation (5.6) étant prévue sur l'élément de connexion (5) pour la séparation de la première région de fixation (5.4) de la deuxième région de fixation (5.5).

7. Élément de fixation (1) selon l'une des revendications précédentes, un écrou (1.6) étant prévu pour le vissage sur la douille (1.1), afin de retenir l'élément de fixation (1) sur le premier composant (4) au moyen d'une connexion vissée.

8. Élément de fixation (1) selon la revendication 7, l'écrou (1.6) et la douille (1.1) présentant des dentures (1.14, 1.15) complémentaires l'une à l'autre, qui sont configurées pour entraver le desserrage ou la perte de l'écrou (1.6).

9. Élément de fixation (1) selon l'une des revendications précédentes, un élément ressort (2) servant à la connexion par complémentarité de formes et/ou par friction de l'élément de compensation (1.4) sur l'élément de connexion (5) étant disposé dans le logement (1.2).

10. Élément de fixation (1) selon l'une des revendications précédentes, la douille (1.1) présentant une interface (1.5) pour le logement dans l'ouverture de logement (4.1) du premier composant (4), l'interface (1.5) présentant une section transversale différant de la forme circulaire et/ou l'interface (1.5) présentant une plus petite section transversale que l'ouverture de logement (4.1).
